# FASCICULE DE BREVET EUROPEEN

(11) **EP 1 932 806 B1**
(45) Date de publication et mention de la délivrance du brevet: **07.04.2010**
(21) Numéro de dépôt: 07122796.1
(22) Date de dépôt: 10.12.2007
(51) Int. Cl.: C01B 31/02, B01J 35/02

(54) **Procédé de fabrication de nanotubes de carbone à coeurs métalliques**
Herstellungsverfahren von Kohlenstoff-Nanokanälen mit Metallseelen
Method for manufacturing carbon nanotubes with metal cores

(30) Priorité: 08.12.2006 FR 0610729
(43) Date de publication de la demande: 18.06.2008
(73) Titulaire: THALES, 92200 Neuilly sur Seine (FR)
(72) Inventeur: Legagneux, Pierre, 78320, Le Mesnil Saint Denis (FR); Xavier, Stéphane, 77000, Vaux le Penil (FR); Minoux, Eric, 75016, Paris (FR); Schnell, Jean-Philippe, 75007, Paris (FR)
(74) Mandataire: Esselin, Sophie

(56) Documents cités:
- GROBERT N ET AL: "Enhanced magnetic coercivities in Fe nanowires" APPLIED PHYSICS LETTERS, AIP, AMERICAN INSTITUTE OF PHYSICS, MELVILLE, NY, US, vol. 75, no. 21, 22 novembre 1999 (1999-11-22), pages 3363-3365, XP002957637 ISSN: 0003-6951
- BONARD JEAN-MARC ET AL: "Field emission from cylindrical carbon nanotube cathodes: Possibilities for luminescent tubes" APPLIED PHYSICS LETTERS, AIP, AMERICAN INSTITUTE OF PHYSICS, MELVILLE, NY, US, vol. 78, no. 18, 30 avril 2001 (2001-04-30), pages 2775-2777, XP012027907 ISSN: 0003-6951
- NOURY O ET AL: "Growth of carbon nanotubes on cylindrical wires by thermal chemical vapor deposition" CHEMICAL PHYSICS LETTERS, NORTH-HOLLAND, AMSTERDAM, NL, vol. 346, 12 octobre 2001 (2001-10-12), pages 349-355, XP002245912 ISSN: 0009-2614
- SHIMIZU Y ET AL: "CYLINDRICAL METAL WIRE SURFACE COATING WITH MULTIWALLED CARBON NANOTUBES BY AN ATMOSPHERIC-PRESSURE MICROPLASMA CVD TECHNIQUE" CHEMICAL VAPOR DEPOSITION, WILEY-VCH VERLAG, WEINHEIM, DE, vol. 11, no. 5, mai 2005 (2005-05), pages 244-249, XP001236213 ISSN: 0948-1907

## Description

La présente invention concerne un procédé de fabrication de nanotubes de carbone à coeurs métalliques, particulièrement adaptés pour être utilisés notamment comme sources électroniques (instrumentation), et comme cathodes froides dans des dispositifs électroniques tels les tubes électroniques amplificateurs et oscillateurs micro-ondes et THz, ou encore des sources de rayons X, UV. Ces nanotubes de carbone à coeurs métalliques ont des applications nombreuses dans différents domaines tels la télécommunication par satellites, la sécurité, le contrôle industriel en ligne, l'instrumentation scientifique, les écrans plats, les radars, les armes hyperfréquences, ... L'invention est également particulièrement adaptée pour réaliser des interconnections (domaine de la connectique), pour réaliser des micro-systèmes électromécaniques (MEMS) dont les domaines d'application sont notamment la commutation radiofréquence RF et les résonateurs à haut facteur de qualité, et pour le stockage magnétique de données.

Une cathode froide à pointes émettrices est une structure à émission de champ FEA *(Field Emission Array),* qui comporte généralement un grand nombre de pointes émettrices disposées sur un substrat.

Il a été montré qu'il était possible de fabriquer des pointes formées par des nanotubes de carbone à coeurs métalliques, par exemple des coeurs métalliques de Pb, Cu, Fe, Co, Ni, Sn.

Dans l'invention on s'est particulièrement intéressé à ce type de pointes, parce qu'elles permettent notamment d'émettre des densités de courant intéressantes, supérieures à celles des nanotubes de carbone, et qu'elles ont une stabilité supérieure à celles des pointes métalliques (tenue à la température, résistance mécanique). Ces pointes doivent ainsi permettre de réaliser des tubes électroniques plus performants. En outre, il a été également montré que ces nanotubes à coeurs métalliques possèdent des propriétés magnétiques intéressantes permettant de réaliser des dispositifs de stockage et lecture magnétiques de données, comme expliqué dans l'article *"*Enhanced magnetic coercivities in Fe Nanowires" de N. Grobert et al, Applied Physic Letters, Vol. 75, N°21, 22 novembre 1999.

Dans l'invention on s'intéresse à la réalisation de telles pointes.

Divers procédés de fabrication sont connus, qui utilisent en particulier la réalisation de nanotubes de carbone puis leur remplissage par des méthodes thermiques ou chimiques. On peut citer par exemple les articles suivants : *"*Capillarity-induced filling of carbon nanotubes" de P.M. Ajayan et al, Nature 361, pp 333_334, 28 janvier 1993 ; *"*A method for synthezing large quantities of carbon nanotubes and encapsulated copper nanowires" de A.A. Setlur et al, Applied Physics Letters, Vol. 69, Issue 3, pp 345-347. D'autres procédés sont basés sur une croissance simultanée nanotube de carbone/coeur métallique par thermolyse de composés organométalliques, notamment par thermolyse de ferrocène. Les articles suivants donnent quelques exemples de ces procédés de thermolyse : *"Enhanced magnetic coercivities in Fe nanowires"* de N.Grobert et al déjà cité ci-dessus ; *"*Production and Characterization of Single-Crystal FeCo Nanowires Inside Carbon Nanotubes " de A. L. Elias et al, Nano Lett. 2005, vol. 5, N°3, pp 467-472. Dans ce dernier article, on réalise une thermolyse d'un aérosol contenant du toluène, du ferrocène et du cobaltocène dilués dans un gaz neutre (argon) entre 650 et 750°C. Il a été montré que ce procédé fournissait des coeurs métalliques très compacts et cristallisés. Ces propriétés de compacité sont notamment intéressantes pour la bonne conduction électrique du coeur métallique et sont à rapprocher des fortes pressions auxquelles sont soumis ces coeurs métalliques de la part des nanotubes (cf *"*Carbon Nanotubes as High Pressure cylinders and nanoextruders" de P.M Ajahan et al, Science, Vol.312, 26 mai 2006.

Cependant, les procédés de fabrication par remplissage des nanotubes sont complexes, car ils nécessitent notamment que les nanotubes soient ouverts. Le remplissage du nanotube peut être incomplet et le métal peut ne pas atteindre sa densité théorique. Les procédés de croissance directe des nanotubes à coeurs métalliques par thermolyse permettent d'obtenir un métal compact, mais ils ont notamment comme inconvénient de ne pas permettre aisément une localisation de la croissance des nanotubes à des endroits prédéfinis sur le substrat. Or pour nombre d'applications, il est important de pouvoir localiser les différentes pointes, notamment en ce qui concerne les cathodes froides afin d'assurer une distance optimum entre elles, en sorte notamment qu'il n'y ait pas d'écrantage des champs électriques entre les pointes, ce qui serait préjudiciable au phénomène d'extraction des électrons à chaque pointe.

Pour ces différentes raisons, un nouveau procédé a été recherché pour réaliser des nanotubes de carbone à coeurs métalliques, et notamment, un procédé simple à réaliser qui assure à la fois la compacité du métal, un remplissage complet du nanotube, et la possibilité de localiser les nanotubes de manière quasi-déterministe.

Une solution technique a été trouvée dans l'invention, dans un procédé par lequel on réalise d'abord le coeur métallique, c'est à dire un fil métallique, que l'on revêt ensuite de feuillets de carbone à liaisons de symétrie sensiblement sp2 (dans la suite, pour simplifier, on dira « carbone à symétrie sp2 »).

L'invention concerne donc un procédé de fabrication d'un ou d'une pluralité de tubes de carbone à coeurs métalliques de dimensions nanométriques et/ou micrométrique, caractérisé en ce qu'il comprend une phase de réalisation d'un ou de fils métalliques sur un substrat conducteur, suivie d'une phase de formation d'un revêtement de feuillets de carbone de symétrie sp2 sur au moins ledit ou lesdits fils métalliques, ladite phase de formation du revêtement, comprenant :
- un apport de carbone sur ou sous la surface d'une zone d'apport comprenant au moins le ou les fils métalliques;
- une phase de traitement thermique du carbone, telle qu'un revêtement de feuillets de carbone de symétrie sp2 est produit dans ladite zone d'apport.

L'apport peut être réalisé avant ou pendant la phase de traitement thermique. Une dissolution du carbone dans une zone immédiatement sous la surface des fils métalliques est obtenue soit directement par le procédé d'apport de carbone, soit lors de la phase de traitement thermique, avec expulsion sous forme de feuillets de carbone de symétrie sp2.

En outre le carbone peut être avantageusement apporté sous ou sur la surface du substrat lui-même, en sorte d'obtenir un revêtement de carbone de symétrie sp2 en continuité sur le substrat et le ou les fils métalliques.

Dans une première variante, le procédé comprend une première phase d'apport de carbone par dépôt de carbone amorphe, puis la phase de traitement thermique ; la dissolution du carbone dans une zone immédiatement sous la surface de la zone de dépôt est obtenue lors de l'étape thermique.

Dans une autre variante, le procédé comprend une première phase d'apport de carbone par implantation ionique, puis la phase de traitement thermique ; l'apport de carbone et sa dissolution en surface de la zone exposée sont obtenus dans cette première phase, avant l'étape thermique.

Dans une autre variante, le procédé comprend une première phase d'apport de carbone par dépôt d'un carbone en solution avec du métal, puis la phase de traitement thermique ; le carbone est ainsi directement sous forme dissolue dans la couche ainsi déposée en surface de la zone exposée, avant l'étape thermique.

Dans une autre variante, l'apport, la dissolution du carbone et la réalisation du revêtement de carbone sp2 sur le fil métallique par expulsion sont obtenus au cours de la phase de traitement thermique, par exposition à un gaz contenant du carbone (CH₄ ou C₂H₂).

Avantageusement, l'étape de fabrication des fils métalliques comprend l'utilisation d'une membrane nanoporeuse comprenant au moins un pore servant de moule pour la réalisation de chaque fil par croissance électrolytique.

De préférence, le procédé est tel que chaque fil métallique formé dans un pore de la membrane est localisé de façon quasi-déterministe sur la membrane, au moyen d'un masque.

Le masque peut être utilisé pour localiser les pores de façon quasi-déterministe ; ou il peut être utilisé pour sélectionner de façon quasi-déterministe le ou les pores dans lesquels un fil métallique pourra croître par électrolyse.

L'invention concerne aussi un procédé de fabrication d'un ou d'une pluralité de fils métalliques de dimensions nanométriques et/ou micrométriques, sur un substrat conducteur, comprenant une étape de réalisation d'une membrane monopore ou multipores sur le substrat, suivie d'une électrolyse pour faire croître chaque fil métallique dans un pore de ladite membrane, caractérisé en ce qu'il comprend la réalisation d'un masque dans un matériau isolant électriquement sous ladite membrane permettant une sélection d'un ou de pores de la membrane dans lequel ou lesquels faire croître un fil métallique par électrolyse.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 illustre de façon schématique un nanotube de carbone à coeur métallique;
- les figure 2a à 2c illustrent des étapes de fabrication d'une membrane multipores avec localisation aléatoire des pores;
- les figures 3a à 3c illustrent des étapes de fabrication d'une membrane multipores avec localisation quasi-déterministe des pores qui serviront de moule à la formation des fils métalliques;
- les figures 4a et 4c illustrent des étapes de fabrication des fils métalliques à partir d'une membrane multipores ;
- les figures 5a à 5e illustrent des étapes d'une autre variante de fabrication;
- les figures 6a à 6c illustrent une variante des étapes de fabrication 3a à 3c;
- les figures 7a à 7d illustrent des phases d'apport de carbone et traitement thermique selon une première variante de réalisation de l'invention;
- la figure 8 illustre un exemple de courbe de température en fonction du temps qui peut être utilisée dans une phase de traitement thermique selon l'invention;
- les figures 9a à 9c illustrent des phases d'apport en carbone et de traitement thermique selon une deuxième variante de réalisation de l'invention;
- les figures 10a et 10b illustrent des phases d'apport en carbone et de traitement thermique selon une troisième variante de réalisation de l'invention;
- la figure 11 illustre une phase simultanée d'apport en carbone et de traitement thermique selon une quatrième variante de réalisation de l'invention ;
- la figure 12 est une structure schématique de cathode FEA à pointes émissives à nanotubes de carbone à coeurs métalliques, disposées de façon quasi-déterministe sur un support conducteur qui peut être obtenue avec un procédé de fabrication selon l'invention; et
- la figure 13 est un organigramme de l'enchaînement des étapes mises en oeuvre dans un procédé de fabrication selon l'invention.

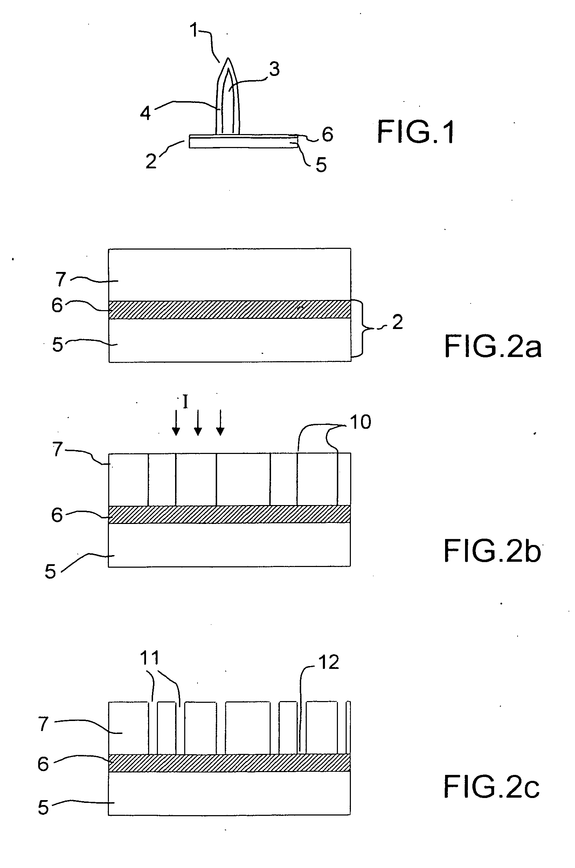

La figure 1 illustre une pointe émettrice 1 de type nanotube de carbone à coeur métallique selon l'invention. Cette figure est très schématique. On notera que le sommet de la pointe n'est pas nécessairement pointu comme illustré.

La pointe est formée sur un substrat conducteur 2. Elle comprend un fil métallique 3, de dimensions nanométriques et/ou micrométriques encapsulé, enveloppé par un revêtement 4 formé de feuillets de carbone à symétrie sp2. Ce revêtement 4 forme le nanotube de carbone et le fil 3 forme le coeur métallique de la pointe 1.

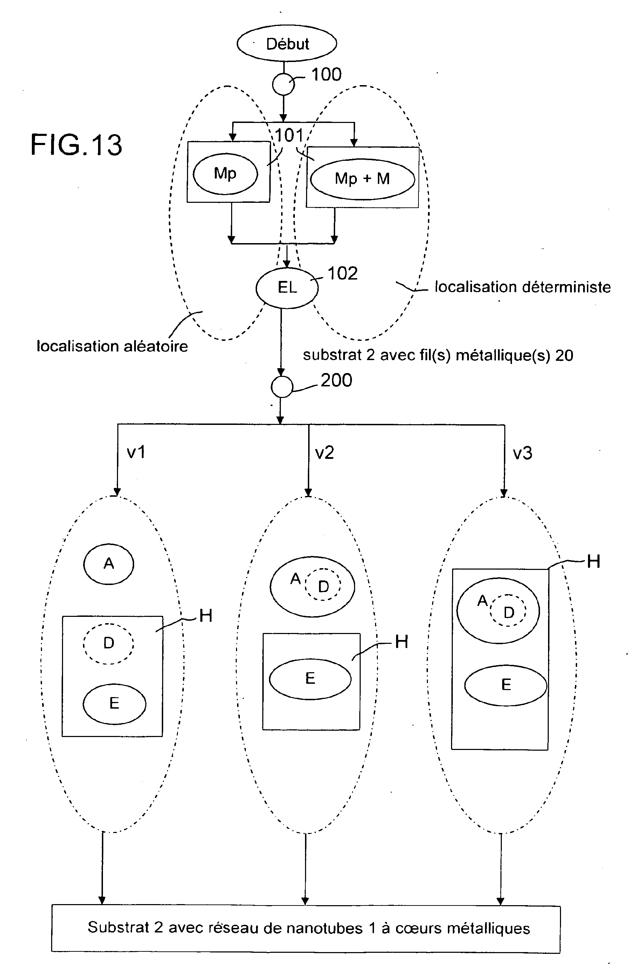

Le substrat conducteur 2 comprend généralement un substrat semi-conducteur 5 fortement dopé, revêtu d'une couche conductrice 6, typiquement une couche métallique, de manière à obtenir les meilleures propriétés de conduction électrique. Les fils métalliques sont réalisés dans une première phase 100 du procédé (figure 13), par exemple un procédé qui comprend principalement une étape de réalisation Mp d'une membrane nanoporeuse monopore ou multipores 7 sur le substrat 2, puis une électrolyse EL pour faire croître un métal ou un alliage dans un pore 11 de la membrane, pour obtenir un fil métallique dans le pore, qui sert alors de moule pour ce fil.

Par exemple, on réalise des pores dans une membrane polymère. Un procédé correspondant est décrit dans la publication *"*Fabrication of a new generation of track-etched templates and their use for the synthesis of metallic and organic nanostructures" de Laurence Dauginet-De Pra et al, Nuclear Instruments and Methods in Physics Research Section B: Beam Interactions with Materials and Atoms, Volume 196, Issues 1-2, November 2002, pages 81-88.

De manière plus détaillée, un tel procédé utilise une irradiation I aux ions lourds et rapides d'une membrane polymère, par exemple un polycarbonate. Cette irradiation conduit à la formation d'une zone perturbée appelée trace latente, qui correspond à un dépôt considérable d'énergie le long du parcours rectiligne de l'ion dans le polymère. Les traces latentes ainsi formées dans le polymère peuvent être ensuite révélées par attaque chimique, pour conduire à la création de pores cylindriques rectilignes de très petit diamètre, parallèles entre eux. On obtient un matériau qui dans la littérature est appelé membrane microporeuse ou multipores, ou encore membrane *"track-etched".*

Les figures 2a à 2c illustrent un exemple d'un procédé correspondant. Comme illustré sur la figure 2a, un substrat conducteur 2 est formé. Dans l'exemple, il comprend un substrat semi-conducteur 5, par exemple un substrat silicium fortement dopé, recouvert d'une première couche conductrice 6, par exemple une couche de métal. Une membrane polymère 7, par exemple un polycarbonate PC, est déposée sur le substrat conducteur 2 (sur la couche 6). La membrane 7 est irradiée par un bombardement ionique I d'ions à forte énergie, par exemple des ions d'argon à 200 Mev, puis soumise à une illumination de rayons UV. Les traces latentes 10 qui sont formées par cette irradiation (figure 2b), sont ensuite révélées, typiquement par attaque chimique au moyen d'un agent chimique de révélation approprié. On obtient une pluralité de pores 11 (figure 2c), c'est à dire des trous cylindriques rectilignes dans la membrane 7, sur toute son épaisseur.

Avec un tel procédé, les traces 10 (figure 2b) et les pores 11 qui en découlent (figure 2c) sont répartis de façon aléatoire dans la membrane 7.

Pour obtenir un réseau de pores dont les positions sont obtenues de façon quasi-déterministe, la phase 100 comprend avantageusement la réalisation M d'un masque (figure 13) qui va permettre une localisation ou une sélection d'un ou de pores 11 de la membrane dans lequel ou lesquels faire croître un fil métallique 20 par électrolyse.

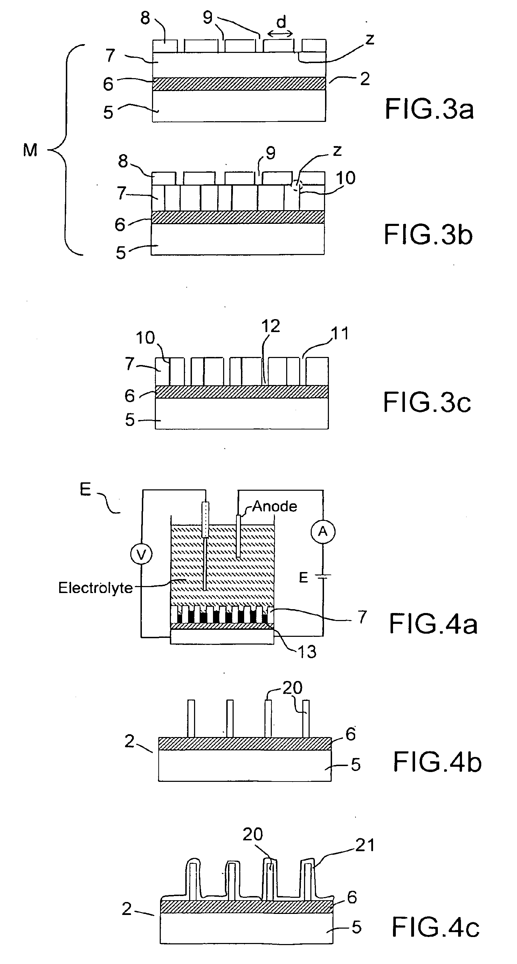

Dans un premier mode de réalisation illustré sur les figures 3a et suivantes, le masque est réalisé préalablement à l'irradiation I de la membrane, et va agir comme masque lors de l'étape de révélation chimique des traces latentes 10. Dans ce mode, la réalisation M du masque comprend une étape de lithographie et gravure d'une couche 8, par exemple une couche de métal, déposée par-dessus la membrane 7, comme illustré sur les figures 3a et 3b : des trous 9 sont gravés dans la couche 8, suivant un dessin dans lequel la position des trous et la distance inter-trous d sont déterminés, mettant à jour la membrane 7 dans des zones z correspondantes. Dans un exemple, la couche 8 faisant masque est une couche d'aluminium.

Ensuite la membrane (avec le masque 8) est soumise au bombardement ionique et irradiée. On obtient des traces latentes 10 dans la couche 7 (figure 3b). On procède alors à la révélation des pores 11 ; seules les traces latentes 10 dans les zones z de la membrane, sous les ouvertures 9, sont révélées et donnent naissance à des pores 11, car seules ces zones z sont exposées à l'agent chimique de révélation, la couche 8 faisant office de masque pour l'opération de révélation dans les autres zones (figure 3c).

Les trous 9 réalisés dans la couche 8 ont des dimensions déterminées pour obtenir en moyenne une seule trace latente dans la membrane par trou 9 avec la dose d'irradiation appliquée.

Les trous sont distants les uns des autres d'une dimension prédéterminée d. Mais dans chaque zone z de la membrane correspondant à un trou 9 du masque 8, la trace latente 10, et par suite le pore 11, peut être n'importe où dans la zone, par exemple sur un bord, au milieu . Ils sont donc localisés de façon quasi-déterministe. Cette localisation quasi-déterministe est avantageuse pour les applications de ces nanotubes à des cathodes froides à émission de champ. En effet, ceci permet d'obtenir une densité de pointes optimum sur le substrat sans risques d'écrantage des champs électriques aux sommets des pointes.

On obtient ainsi une membrane 7 monopore ou multipores, à localisation quasi-déterministe des pores (figures 3a à 3c), ou une membrane 7 multipores à localisation aléatoire des pores (figures 2a à 2c).

Les pores vont servir de moules pour la fabrication des fils métalliques, par croissance électrolytique, comme illustré sur les figures 4a à 4c. Selon l'exemple illustré, on réalise un fil métallique 20 dans chacun des pores 11 de la membrane 7. Ce fil métallique est constitué d'un métal 13 ou d'un alliage de métaux. La croissance des fils métalliques, un dans chacun des pores, est obtenue par une électrolyse EL (figure 4a), typiquement réalisée à température ambiante.

La membrane 7 peut alors être supprimée (figure 4b). Cette suppression de la membrane peut par exemple être réalisée par dissolution dans un solvant approprié.

Comme illustré sur la figure 4b, on obtient un substrat 2, dans l'exemple formé des couches 5 (silicium) et 6 (métal) et un réseau de fils métalliques parallèles entre eux, disposés sensiblement perpendiculairement par rapport au plan de surface du substrat, et de mêmes dimensions définies par l'épaisseur de la membrane 7 ou la durée du dépôt électrolytique et par la dimension des pores faisant moules. On notera que la dimension des pores est principalement fonction des caractéristiques de l'irradiation I et du processus de révélation.

La figure 4c montre une étape supplémentaire qui consiste en un dépôt d'une fine couche de métal 21 catalyseur d'une formation de carbone sp2, au moins sur la surface des fils métalliques et de préférence sur l'ensemble de la surface comprenant le substrat 2 et les fils 20, en prévision de la phase de formation du revêtement de feuillets de carbone sp2, au moins sur la surface des fils.

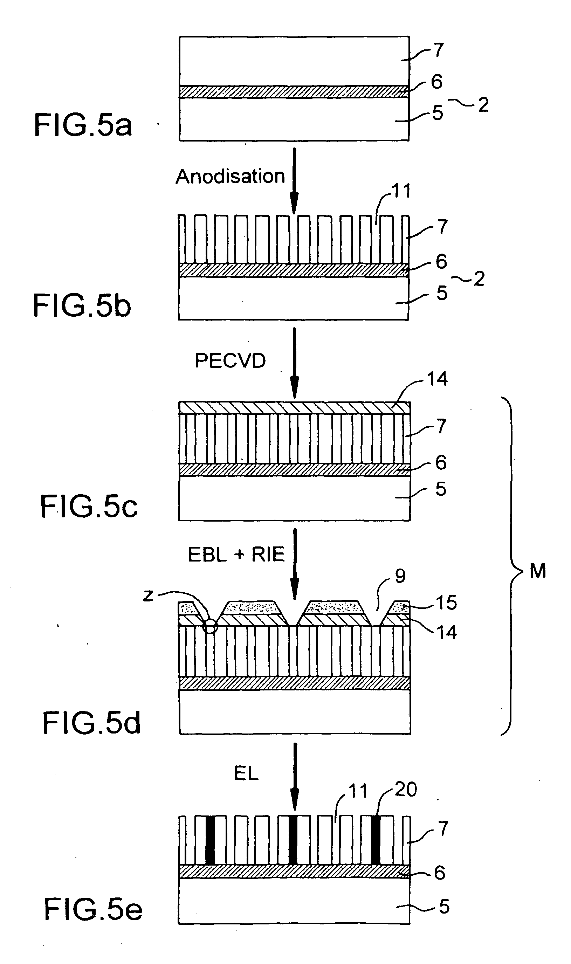

Les figures 5a à 5e décrivent une variante de réalisation de la membrane multipores ou nanoporeuse 7, dans laquelle la membrane est en alumine. On trouve une description d'une telle membrane en alumine, et d'un procédé de localisation des pores correspondant dans la publication « Controlled growth of single nanowires within a supported alumina template », A. Vlad et al. Nanotechnology 17 (2006) 4873-4876. Plus précisément, une telle membrane nanoporeuse 7 en alumine peut-être obtenue comme suit :

On part du substrat conducteur 2. Une membrane d'alumine (Al₂O₃) 7 est réalisée sur ce substrat conducteur, par dépôt d'une couche d'aluminium 14 (figure 4a) puis anodisation qui entraîne la formation de pores 11 par percement par effet d'oxydation anodique (figure 4b) : On obtient une membrane nanoporeuse, à localisation aléatoire des pores, similaire à celle obtenue par le procédé illustré aux figures 2a à 2c.

Pour obtenir une localisation déterministe ou quasi déterministe des fils métalliques, on prévoit avantageusement une étape M de réalisation d'un masque sur la membrane anodisée, pour sélectionner les pores dans lesquels faire croître les fils métalliques par électrolyse. Dans un mode de réalisation illustré sur les figures 5c à 5e, cette étape M prévoit typiquement un dépôt d'une couche 14 de nitrure de silicium (Sin) sur la membrane anodisée 7, typiquement un dépôt PECVD, suivi d'un dépôt d'une couche 15 de polyméthylméthacrylate PMMA, qui va permettre de définir les ouvertures 9 dans le masque 14 (couche SiN). Pour cela des ouvertures sont d'abord réalisées dans la couche de PMMA 15, typiquement par lithographie électronique EBL. La couche 15 sert alors de masque pour la définition des ouvertures 9 à réaliser dans la couche 14 de nitrure de silicium, par attaque chimique RIE (figure 5d).

La couche 14 de nitrure de silicium avec ces ouvertures 9 forme alors un masque qui permet la sélection des pores parmi les pores de la membrane, à raison d'un seul pore par ouverture 9 du masque 14, dans lesquels on va faire croître les fils métalliques 20 (figure 5e) par croissance électrolytique EL. Ensuite, comme décrit précédemment en relation avec les figures 4a et 4b, on peut procéder au retrait de la membrane 7, et éventuellement au dépôt d'une couche d'un métal catalyseur 21 comme décrit précédemment en relation avec la figure 4c.

Les dimensions des pores dépendent typiquement du process d'anodisation. La distance entre les fils et leur localisation est définie par le dessin du masque (couches 14, 15).

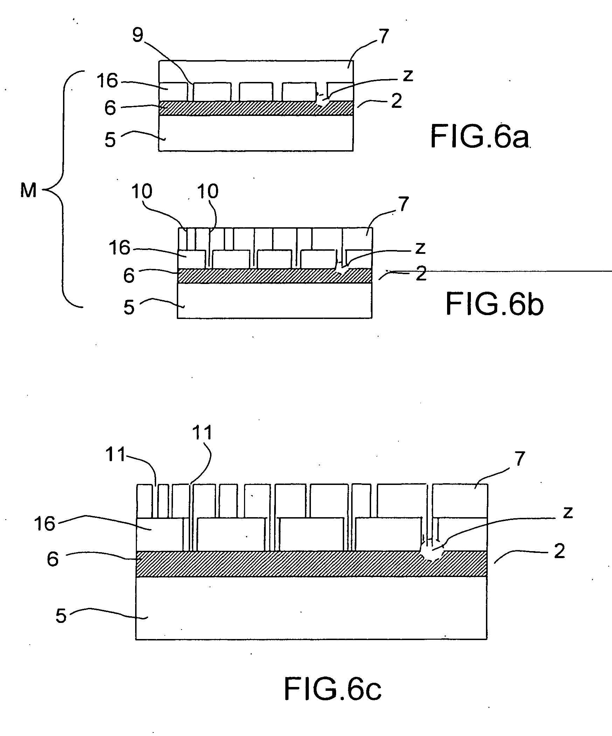

Dans une variante du procédé permettant une localisation quasi déterministe des fils 20, un masque est réalisé sous la membrane qui permet la sélection des pores dans lesquels on va pouvoir faire croître des fils métalliques. Une telle variante est illustrée sur les figures 6a à 6c. Elle s'applique aussi bien à des membranes nanoporeuses 7 en polymère de type *track-etched* (figures 3a à 3c) qu'à des membranes nanoporeuses 7 en alumine obtenues par oxydation anodique (figures 5a à 5d).

De manière plus détaillée, un masque est réalisé dans un matériau isolant, sous la membrane naonoporeuse 7 qui peut avoir été obtenue selon l'un quelconque des procédés décrit précédemment, notamment celui correspondantes aux figures 2a à 2c, 3a à 3c ou 5a à 5b.

Comme illustré sur les figures 6a à 6c, on procède au dépôt sur la couche conductrice 6 du substrat conducteur 2, d'une couche d'isolant 16 ; on grave dans cette couche d'isolant les ouvertures 9 selon une disposition et un dessin choisis, lesquelles ouvertures 9 laissent apparaître la couche conductrice 6 dans les zones z. On réalise ensuite une membrane nanoporeuse 7 selon l'un quelconque des procédés décrits ci-dessus. Les pores de cette membrane peuvent être disposés aléatoirement. Puis on procède à la croissance électrolytique EL comme décrit ci-dessus, en relation avec les figures 4a à 4c. La croissance électrolytique ne se produira que dans les pores de la membrane 7 situés au-dessus des ouvertures 9. Pour les autres pores, la continuité de la conduction électrique sera interrompue par la couche isolante 16, et le dépôt électrolytique ne se produira pas.

D'autres procédés de localisation peuvent également s'appliquer, par exemple celui décrit dans le brevet français publié sous le numéro FR2857954, déposé le 25 juillet 2003, et ayant pour titre "procédé de croissance localisée de nanofils ou de nanotubes ".

La phase 100 (figure 13) du procédé qui vient d'être décrite permet d'obtenir des fils métalliques 20 de dimensions nanométriques ou micrométriques sur un substrat 2 (figure 4b) à partir d'une membrane nanoporeuse Mp.

L'utilisation d'un masque M sur ou sous la membrane nanoporeuse Mp, entre la membrane et le substrat est un avantage supplémentaire, car elle permet soit de localiser les pores sur la membrane de manière déterministe ou quasi-déterministe dans le processus de fabrication de la membrane (masque 8, figures 3a-3b), soit de sélectionner des pores parmi les pores de la membrane qui vont servir de moules effectifs pour l'opération de croissance électrolytique (masque 14 et figure 5d, ou masque 16 et figures 6a-6c). Chaque fil métallique 20 est obtenu dans une zone z localisée sur le substrat, correspondant à une ouverture 9 du masque.

La phase 200 suivante d'un procédé selon l'invention consiste en la réalisation d'un revêtement de chacun desdits fils métalliques 20 par des feuillets de carbone de symétrie sp2 qui vont former un nanotube de carbone sur chaque fil. Avantageusement, on obtient un revêtement des feuillets de carbone sp2 en continuité sur le substrat et les fils métalliques.

Cette phase 200 illustrée sur la figure 13 consiste principalement en un apport de carbone A, et un traitement thermique H du carbone.

Le carbone est apporté sur ou sous la surface d'une zone d'apport. Cette zone d'apport comprend la surface sur laquelle on veut réaliser le revêtement de feuillets de carbone sp2. Elle comprend donc au moins les fils métalliques 20, et avantageusement, le substrat et les fils métalliques.

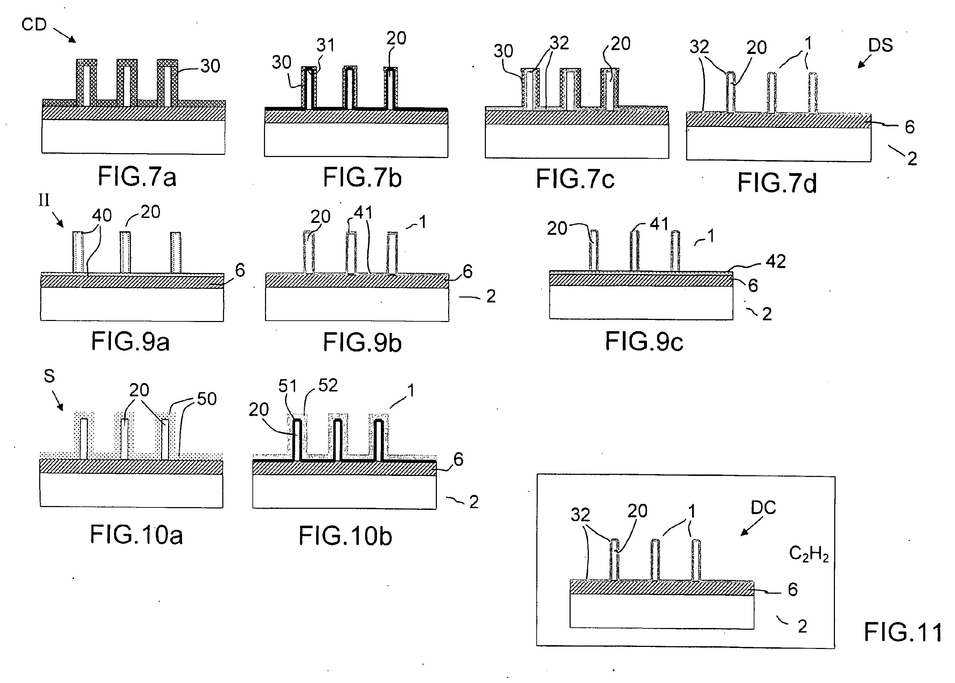

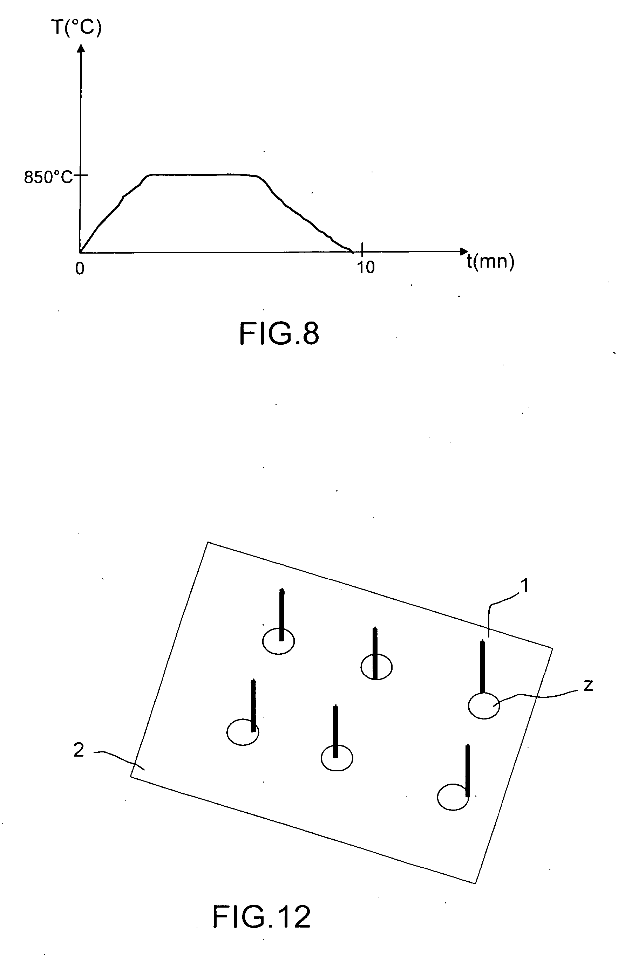

Le traitement thermique H a pour effet de provoquer une expulsion E de tout ou partie du carbone apporté et dissout dans une zone à proximité de la surface de la zone d'apport. La dissolution D du carbone peut être obtenue intrinsèquement dans la phase de traitement thermique (variante v1), ou bien par le procédé d'apport de carbone lui-même (variante v2), ou les deux (variante v3). Dans un premier mode de réalisation correspondant à la variante v1 (figure 13) illustré en exemple sur les figures 7a à 7d, cette phase comprend les étapes suivantes :
- Apport de carbone A par dépôt CD d'une couche de carbone amorphe 30 en surface de la zone d'apport (substrat 2 et fils métalliques 20). Ce dépôt est par exemple obtenu par un procédé dépôt chimique en phase vapeur (CVD), ou en phase vapeur assisté par plasma (PECVD), ou encore par vaporisation par arc électrique ou par ablation laser d'une cible de graphite. L'épaisseur de la couche de carbone amorphe déposée peut être de l'ordre de 0.3 nanomètres à quelques centaines de nanomètres. La couche de carbone amorphe déposée est représentée sur la figure 7a par une zone à motifs à points.
- traitement thermique H, avec une phase de montée en température suivie d'une étape de redescente en température. Une courbe de température en fonction du temps T°C=f(t) est illustrée en exemple sur la figure 8. Elle comprend une montée en température jusqu'à une température prédéterminée T_{H}, suivie d'un plateau d'une dizaine à quelques dizaines de minutes à cette température T_{H}, et une redescente en température. Des conditions de vide bien déterminées sont appliquées pour éviter toute contamination pendant le processus.

Pendant une première phase comprise dans la montée en température et le plateau, une partie au moins du carbone amorphe déposé se dissout à l'intérieur du fil métallique sous la surface. Cette zone sous la surface dans laquelle on a du carbone dissout 31 dans le métal est représentée en trait épais noir sur la figure 6b. Tout le carbone amorphe 30 n'est pas nécessairement dissout (cas illustré). Lors du refroidissement, le carbone dissout (en noir) se trouve en saturation et est expulsé hors du métal sous forme de feuillets de carbone de symétrie sp2 qui forme alors un revêtement 32 des fils métalliques 20 (figure 6c). Ce revêtement est représenté en trait épais gris clair sur la figure.

Dans un exemple pratique dans lesquels les fils métalliques ont été réalisés en Nickel, le traitement thermique a été effectué sous 10⁻⁵ millibars environ, avec une température T_{H} de 850°C, et un plateau à cette température de l'ordre de 10 minutes. Ce traitement est donc rapide, ce qui est intéressant sur le plan des durées et coûts de fabrication. Il est à noter que dans ce premier mode de réalisation, le métal 13 constituant les fils 20 est un métal catalyseur de là réaction de dissolution du carbone et d'expulsion sous forme sp2.

Avantageusement et comme illustré sur la figure 7c, le métal 6 est également un métal catalyseur de cette réaction de dissolution du carbone et d'expulsion, en sorte que du carbone amorphe pénètre également sous la surface de la couche métallique (figure 7b), et en est ensuite expulsé en sorte que le substrat 2 lui-même est recouvert de feuillets de carbone de symétrie sp2 à la fin de cette étape thermique H. Le revêtement 32 de carbone de symétrie sp2 se produit alors en continuité sur le substrat et les fils, ce qui confère une meilleure solidité à l'ensemble, en particulier, une meilleure accroche des nanotubes de carbone ainsi formés. Dans ce cas la couche 6 et les fils métalliques seront de préférence réalisés dans le même métal, par exemple en Nickel, mais cela n'est pas obligatoire.

En pratique on choisira par exemple comme métal catalyseur de la réaction, un métal pris dans la liste non exhaustive suivante: Fe, Co, Ni, Y, et leurs alliages comme CoPt.

On peut prévoir une suppression du carbone amorphe 30 éventuel en excès (figure 7d), par exemple par une étape de recuit sous oxygène, par exemple un recuit à 400°C, ou par un traitement plasma.

On notera que si le métal de la couche 6 n'est pas catalyseur de la réaction thermique, on n'obtient pas le revêtement de carbone sp2 sur la couche 6 et le carbone amorphe déposé sur cette couche est de préférence éliminé comme indiqué ci-dessus.

Si le métal de la couche 6 est catalyseur, on obtient un réseau de nanotubes de carbone à coeurs métalliques comme illustré sur la figure 7d, avec des feuillets de carbone de symétrie sp2 recouvrant avantageusement le substrat 2 et les nanotubes en continuité.

Dans un deuxième mode de réalisation correspondant à la variante v2 (figure 13) illustré en exemple sur les figures 9a et 9b, cette phase 200 comprend les étapes suivantes :
- Apport de carbone A par implantation ionique II sous la surface de la zone d'apport (substrat 2 et fils métalliques 20 dans l'exemple) : le carbone est envoyé avec une énergie cinétique élevée de sorte qu'il traverse la surface de la zone d'apport et qu'il y pénètre sur une profondeur ajustable (figure 9a). Le carbone 40 se trouve ainsi déjà dissout dans le métal avant l'étape H de traitement thermique. Après l'étape de traitement thermique H, ce carbone est expulsé sous forme de feuillets de carbone de symétrie sp2, formant un revêtement 41 de feuillets de carbone sp2. Le métal 13 constituant les fils 20 est un métal catalyseur de la réaction thermique d'expulsion sous forme sp2.

Dans le cas où la couche conductrice 6 est réalisée dans un métal catalyseur de la réaction thermique, on obtient après l'étape thermique, un revêtement 41 des feuillets de carbone en continuité sur la surface du substrat 2 et les fils métalliques 20 (figure 9b).

Dans le cas où la couche 6 n'est pas réalisée dans un métal catalyseur de la réaction thermique, on a une zone implantée non utilisée dans la couche 6 (figure 9c), sans inconvénients.

Un troisième mode de réalisation correspondant à la variante v2 (figure 13) de l'invention est illustré en relation avec les figures 10a et 10b. Dans ce mode, l'apport A de carbone est effectué sur la surface de métal du substrat 2 et des fils 20, par un dépôt de carbone en solution solide 50 avec un métal catalyseur (figure 10a). On obtient ainsi une couche de carbone déjà dissout dans un métal catalyseur en surface de la zone d'apport. L'étape de traitement thermique H est alors appliquée, pour obtenir l'expulsion du carbone hors de ce métal catalyseur, sous forme de feuillets de carbone de symétrie sp2 (figure 10b). On obtient la structure suivante: un fil métallique 20, revêtu d'une couche 51 essentiellement constituée du métal qui était dans la solution solide 50, et un revêtement 52 de feuillets de carbone de symétrie sp2.

Le dépôt de la solution étant effectué sur l'ensemble de la surface et des fils, on trouve la bi-structure métal 51 et revêtement de carbone 52 nécessairement en continuité sur toute la surface du substrat 2 et des fils 20 (figure 7b).

Le métal 51 en solution 50 peut être le même que le métal constituant les fils métalliques.

Il peut aussi être différent. Dans ce cas, on montre qu'il est alors avantageux d'utiliser un métal très conducteur pour réaliser les fils 20, par exemple du cuivre Cu, et un métal 51 dans la solution 50 moins conducteur mais qui favorise l'expulsion du carbone, par exemple un métal de la liste non exhaustive suivante Fe, Co, Ni, Y, ou un alliage à partir d'un de ces métaux au moins, par exemple CoPt.

En effet, il a été constaté que les métaux qui catalysent le phénomène d'expulsion du carbone sp2 ne sont pas parmi les métaux les meilleurs conducteurs. D'où l'intérêt de l'utilisation d'un métal très conducteur pour réaliser les fils métalliques, et d'un métal catalyseur en solution : Le coeur métallique peut alors bénéficier des propriétés de grande conductivité du métal utilisé pour réaliser les fils 20, ce qui est favorable à l'application électronique qui en est faite (par exemple une cathode froide FEA), tout en ayant une étape de traitement thermique efficace et rapide, pour former le revêtement 52 par feuillets de carbone de symétrie sp2.

Un quatrième mode de réalisation de l'invention correspondant à la variante v3 (figure 13) est illustré en relation avec la figure 11. Dans ce mode, le métal des fils 20 et éventuellement de la couche 6 est choisi catalyseur de la formation du revêtement de carbone sp2. L'étape d'apport du carbone sur la surface de métal des fils 20 et éventuellement du substrat 2, est accomplie simultanément au plateau de température de l'étape de traitement thermique H (figure 8), par décomposition catalytique DC des espèces précurseurs, incorporation du carbone et expulsion du carbone hors du métal, sous forme de feuillets de carbone de symétrie sp2. En pratique, l'atmosphère dans l'enceinte dans laquelle le traitement thermique est réalisé sous une pression adaptée, typiquement quelques millibars, et contient par exemple du CH4 ou C2H2.

Dans une variante applicable notamment aux premier, deuxième et quatrième modes de réalisation, on dépose sur le substrat muni de fils métalliques 20 une couche d'un métal catalyseur 21 comme illustré sur la figure 4c, puis on procède à l'apport de carbone A et au traitement thermique H. Cette variante est plus particulièrement intéressante lorsque le métal des fils, voire du substrat (couche 6) est bon conducteur mais non catalyseur.

Le procédé de fabrication qui vient d'être décrit et dont les principales étapes et variantes sont schématisées sur la figure 13, est un procédé simple à mettre en oeuvre qui utilise des techniques éprouvées et fiables, et qui permet notamment d'obtenir des coeurs métalliques denses, propriété recherchée. L'étape de traitement thermique peut être très rapide, de l'ordre de quelques minutes à quelques dizaines de minutes, ce qui contribue à la simplicité de mise en oeuvre du procédé et à la réduction du coût de fabrication.

Le procédé de fabrication qui vient d'être décrit est un processus de fabrication collectif d'une pluralité de pointes 1, mais il peut s'appliquer aussi bien, en fonction de l'application visée, pour la fabrication d'une seule pointe.

Ce procédé permet de réaliser des nanotubes de carbone à coeurs métalliques, avec une variété de métaux ou d'alliages. Les agents chimiques révélateurs ou les solvants seront choisis par l'homme de l'art en fonction des matériaux en présence. Les paramètres de température et de durée de l'étape thermique seront essentiellement déterminés en fonction de la nature du métal dans lequel du carbone est ou sera dissout. La densité et les dimensions des pointes 1 obtenues sont réglables, en fonction des applications, en agissant sur la dose du bombardement I de la phase 100, pour la réalisation des traces latentes 10, sur la durée de la révélation de ces traces pour former les pores, sur le temps de croissance électrolytique...

Dans un exemple pratique, l'une ou l'autre des variantes qui viennent d'être décrites permet d'obtenir des pointes 1 ayant une hauteur de l'ordre de 2 micromètres, un diamètre de 50 nanomètres et un espacement moyen entre les pointes de 4 micromètres. On notera à cet égard que l'on peut aussi bien parler de tubes de dimensions nanométriques et ou micrométriques, plutôt que de nanotubes, selon les dimensions recherchées.

Le procédé de fabrication selon l'invention constitue une alternative avantageuse aux procédés déjà existants. Il permet d'obtenir des nanotubes de carbone à coeurs métalliques denses et de disposer ces nanotubes selon un dessin préétabli, avantageusement un réseau régulier ou quasi-régulier comme illustré de façon schématique sur la figure 12 : grâce à l'utilisation d'un masque M pour réaliser une membrane nanoporeuse 7, les nanotubes à coeurs métalliques 1 sont chacun situés dans une zone z respective, un par zone, n'importe où dans cette zone. Cette localisation quasi-déterministe est propre à diminuer les effets d'écran électrostatique entre les émetteurs dans le cas d'une application cathode froide.

Les variantes qui permettent d'obtenir un revêtement de feuillets de carbone sp2 en continuité sur le substrat et les fils 20 (figures 7d, 9b, 10b, 11) présentent un réel avantage quant à l'accrochage des pointes au substrat.

Un procédé de fabrication de nanotubes de carbone à coeurs métalliques selon l'invention permet la réalisation de cathodes froides à plus forte densité de courant, avec des performances sensiblement supérieures pour les tubes électroniques notamment pour l'électronique professionnelle que les tubes de l'état de l'art.

Plus généralement, le procédé peut être appliqué pour la réalisation de cathodes pour tubes électroniques, pour la réalisation d'écrans plats, de dispositifs de stockage et de lecture magnétique de l'information. Il peut être aussi appliqué à la connectique, et à la réalisation de composants MEMs.

Pour l'application à la connectique, et les micocommutateurs MEMS, on obtient alors des microstructures pouvant transporter de forts courants.

Pour les applications résonateurs MEMS, on obtient alors des nanostructures pouvant résonner à haute fréquence, et présentant de forts facteurs de qualité (suppression des défauts de surfaces du par exemple à une oxydation. Voir notamment l'article " Nanoelectromechanical systems " K. L. Ekinci, REVIEW OF SCIENTIFIC INSTRUMENTS 76, 061101 (2005).

## Revendications

1. Procédé de fabrication d'un ou d'une pluralité de tubes de carbone à coeurs métalliques de dimensions nanométriques et/ou micrométriques (1), **caractérisé en ce qu'**il comprend une phase (100) de réalisation d'un ou de fils métalliques (20) sur un substrat conducteur (2), suivie d'une phase (200) de formation d'un revêtement (31, 32, 41, 52) de feuillets de carbone de symétrie sp2 sur au moins ledit ou lesdits fils métalliques, ladite phase (200) de formation du revêtement, comprenant :
- un apport (A) de carbone sur ou sous la surface d'une zone d'apport comprenant au moins le ou les fils métalliques (20);
- une phase de traitement thermique (H) du carbone, telle qu'un revêtement (32, 41, 52) de feuillets de carbone de symétrie sp2 est produit (E) dans ladite zone d'apport.

2. Procédé selon la revendication 1, **caractérisé en ce que** ladite zone d'apport comprend le substrat (2) et ledit ou lesdits fils métalliques (20).

3. Procédé selon la revendication 2, **caractérisé en ce que** ledit substrat (2) comprend en surface une couche en métal (6) sur laquelle sont réalisés le ou lesdits fils métalliques.

4. Procédé selon la revendication 3, **caractérisé en ce que** la couche en métal (6) en surface dudit substrat (2), est une couche d'un métal catalyseur de la formation de feuillets de carbone sp2 en sorte qu'un revêtement (32) de feuillets de carbone de symétrie sp2 est formé en continuité sur le substrat et le ou les fils métalliques (20) à l'issue de ladite phase de traitement thermique.

5. Procédé selon l'une quelconque des revendications précédentes, **caractérisé en ce qu'**il comprend une étape de dépôt en surface de ladite zone d'apport d'une couche d'un métal (21) catalyseur de la formation de feuillets de carbone sp2, préalablement au dit apport de carbone (A).

6. Procédé selon l'une quelconque des revendications précédentes, **caractérisé en ce que** ledit apport de carbone (A) consiste en un dépôt (CD) de carbone amorphe (30) sur la surface de la zone d'apport.

7. Procédé selon la revendication 6, **caractérisé en ce que** l'étape de traitement thermique (H) est suivie d'une étape de suppression de carbone amorphe résiduel.

8. Procédé selon l'une quelconque des revendications 1 à 5, **caractérisé en ce que** l'apport de carbone (A) consiste en une implantation ionique (11) de carbone sous la surface de la zone d'apport, avant ladite phase de traitement thermique (H).

9. Procédé selon l'une quelconque des revendications 1 à 5, **caractérisé en ce que** l'apport de carbone (A) consiste en une décomposition catalytique de composés carbonés pendant ladite phase de traitement thermique (H).

10. Procédé selon l'une quelconque des revendications 1 à 4, **caractérisé en ce que** l'apport de carbone (A) consiste en un dépôt d'une solution solide (50) de carbone et de métal catalyseur de la formation de feuillets de carbone sp2 sur la surface de la zone d'apport, avant ladite phase de traitement thermique (A).

11. Procédé selon la revendication 10, **caractérisé en ce que** le métal (51) en solution (50) avec le carbone est différent du métal des fils métalliques (20), le métal des fils métalliques (20) étant choisi avec une conductivité supérieure au métal (51) en solution avec le carbone.

12. Procédé selon l'une quelconque des revendications précédentes, dans lequel ladite phase (100) de réalisation d'un ou de fils métalliques comprend une étape de réalisation (Mp) d'une membrane monopore ou multipores (7) sur le substrat (2), suivie d'une électrolyse (EL) pour faire croître chaque fil métallique (20) dans un pore (11) de ladite membrane.

13. Procédé selon la revendication 12, dans lequel ladite étape de réalisation (Mp) de la membrane, comprend en outre la réalisation (M) d'un masque (8,14,16) permettant une localisation ou une sélection d'un ou de pores (11) de la membrane dans lequel ou lesquels faire croître un fil métallique (20) par électrolyse.

14. Procédé selon la revendication 13, dans lequel ledit masque est réalisé dans un matériau isolant électriquement, sous ladite membrane (7).

15. Procédé selon l'une des revendications 12 à 14, dans lequel la dite membrane (7) est un polymère et en ce que le ou les pores (11) sont réalisés par bombardement ionique (I) de ladite membrane et révélation chimique.

16. Procédé selon l'une des revendications 12 à 14, dans lequel ladite membrane (7) est en aluminium et les pores (11) sont réalisés dans ladite membrane par anodisation de l'aluminium.

## Claims

1. Method for producing one or a plurality of carbon tubes with metal cores of nanometric and/or micrometric dimensions (1), **characterized in that** it comprises a phase (100) of producing one or more metal wires (20) on a conductive substrate (2), followed by a phase (200) of forming a coating (31, 32, 41, 52) of sheets of carbon with sp2 symmetry on at least said metal wire or wires, said phase (200) of forming the coating comprising:
- an input (A) of carbon on or under the surface of an input zone comprising at least the metal wire or wires (20) ;
- a carbon heat treatment phase (H), such that a coating (32, 41, 52) of sheets of carbon with sp2 symmetry is produced (E) in said input zone.

2. Method according to Claim 1, **characterized in that** said input zone comprises the substrate (2) and said metal wire or wires (20).

3. Method according to Claim 2, **characterized in that** said substrate (2) has on the surface a layer of metal (6) on which said metal wire or wires is/are produced.

4. Method according to Claim 3, **characterized in that** the metal layer (6) on the surface of said substrate (2) is a layer of catalyst metal for the formation of sp2 carbon sheets so that a coating (32) of carbon sheets with sp2 symmetry is formed continuously on the substrate and the metal wire or wires (20) following said heat treatment phase.

5. Method according to any one of the preceding claims, **characterized in that** it includes a step of depositing, on the surface of said input zone, a layer of catalyst metal (21) for the formation of sp2 carbon sheets, prior to said carbon input (A).

6. Method according to any one of the preceding claims, **characterized in that** said carbon input (A) consists of a deposit (CD) of amorphous carbon (30) on the surface of the input zone.

7. Method according to Claim 6, **characterized in that** the heat treatment step (H) is followed by a step of eliminating the residual amorphous carbon.

8. Method according to any one of Claims 1 to 5, **characterized in that** the carbon input (A) consists of the ion implantation (II) of carbon under the surface of the input zone, before said heat treatment phase (H).

9. Method according to any one of Claims 1 to 5, **characterized in that** the carbon input (A) is made by the catalytic decomposition of carbonaceous compounds during said heat treatment phase (H).

10. Method according to any one of Claims 1 to 4, **characterized in that** the carbon input (A) consists of a deposit of a solid solution (50) of carbon and metal catalyst for the formation of sp2 carbon sheets on the surface of the input zone before said heat treatment phase (H).

11. Method according to Claim 10, **characterized in that** the metal (51) in solution (50) with carbon is different from the metal of the metal wires (20), the metal of the metal wires (20) being chosen with a conductivity greater than that of the metal (51) in solution with carbon.

12. Method according to any one of the preceding claims, wherein said phase (100) for producing a metal wire or wires includes a step (Mp) for producing a monopore or multipore membrane (7) on the substrate (2), followed by electrolysis (EL) so as to cause each metal wire (20) to grow in a pore (11) of said membrane.

13. Method according to Claim 12, wherein said step (Mp) for producing the membrane additionally includes the production (M) of a mask (8, 14, 16) for localizing or selecting one or more pores (11) of the membrane in which a metal wire (20) is grown by electrolysis.

14. Method according to Claim 13, wherein said mask is produced in an electrically insulating material under said membrane (7).

15. Method according to one of Claims 12 to 14, wherein said membrane (7) is a polymer and in that the pore or pores (11) are produced by ion bombardment (I) of said membrane and chemical disclosure.

16. Method according to one of Claims 12 to 14, wherein said membrane (7) is made of aluminium and the pores (11) are produced in said membrane by anodizing aluminium.

## Patentansprüche

1. Verfahren zum Herstellen eines oder mehrerer Kohlenstoffrohre mit Metallkernen mit Abmessungen im Nanometer- und/oder Mikrometerbereich (1), **dadurch gekennzeichnet, dass** es eine Phase (100) der Verwirklichung eines oder mehrerer Metalldrähte (20) auf einem Leitersubstrat (2) enthält, gefolgt von einer Phase (200) zum Bilden einer Beschichtung (31, 32, 41, 52) von Kohlenstoffplättchen mit sp2-Symmetrie wenigstens auf dem oder den Metalldrähten, wobei die Beschichtungsbildungsphase (200) enthält:
- eine Zufuhr (A) von Kohlenstoff auf oder unter die Oberfläche einer Zufuhrzone, die wenigstens den oder die Metalldrähte (20) enthält;
- eine Phase (H) zur Wärmebehandlung des Kohlenstoffs, derart, dass in der Zufuhrzone eine Beschichtung (32, 41, 52) aus Kohlenstoffplättchen mit sp2-Symmetrie erzeugt wird (E).

2. Verfahren nach Anspruch 1, **dadurch gekennzeichnet, dass** die Zufuhrzone das Substrat (2) und den oder die Metalldrähte (20) enthält.

3. Verfahren nach Anspruch 2, **dadurch gekennzeichnet, dass** das Substrat (2) auf der Oberfläche eine Metallschicht (6) aufweist, auf der der oder die Metalldrähte verwirklicht sind.

4. Verfahren nach Anspruch 3, **dadurch gekennzeichnet, dass** die Metallschicht (6) auf der Oberfläche des Substrats (2) eine Schicht aus einem Katalysatormetall für die Bildung von sp2-Kohlenstoffplättchen ist, derart, dass am Ende der Wärmebehandlungsphase eine Beschichtung (32) aus Kohlenstoffplättchen mit sp2-Symmetrie auf dem Substrat und dem oder den Metalldrähten (20) kontinuierlich gebildet ist.

5. Verfahren nach einem der vorhergehenden Ansprüche, **dadurch gekennzeichnet, dass** es vor der genannten Kohlenstoffzufuhr (A) einen Schritt des Ablagerns einer Schicht aus einem Katalysatormetall (21) für die Bildung von sp2-Kohlenstoffplättchen auf der Oberfläche der Zufuhrzone enthält.

6. Verfahren nach einem der vorhergehenden Ansprüche, **dadurch gekennzeichnet, dass** die Kohlenstoffzufuhr (A) aus einem Ablagern (CD) von amorphem Kohlenstoff (30) auf der Oberfläche der Zufuhrzone besteht.

7. Verfahren nach Anspruch 6, **dadurch gekennzeichnet, dass** dem Wärmebehandlungsschritt (H) ein Schritt des Entfernens von restlichem amorphem Kohlenstoff folgt.

8. Verfahren nach einem der Ansprüche 1 bis 5, **dadurch gekennzeichnet, dass** die Kohlenstoffzufuhr (A) aus einer Ionenimplantation (II) von Kohlenstoff unter die Oberfläche der Zufuhrzone vor der Wärmebehandlungsphase (H) besteht.

9. Verfahren nach einem der Ansprüche 1 bis 5, **dadurch gekennzeichnet, dass** die Kohlenstoffzufuhr (A) aus einer katalytischen Zerlegung von kohlenstoffhaltigen Verbindungen während der Wärmebehandlungsphase (H) besteht.

10. Verfahren nach einem der Ansprüche 1 bis 4, **dadurch gekennzeichnet, dass** die Kohlenstoffzufuhr (A) aus einem Ablagern einer Festkörperlösung (50) aus Kohlenstoff und einem Katalysatormetall für die Bildung von sp2-Kohlenstoffplättchen auf der Oberfläche der Zufuhrzone vor der Wärmebehandlungsphase (A) besteht.

11. Verfahren nach Anspruch 10, **dadurch gekennzeichnet, dass** das Metall (51), das mit dem Kohlenstoff in Lösung (50) ist, von dem Metall der Metalldrähte (20) verschieden ist, wobei das Metall der Metalldrähte (20) so gewählt ist, dass seine spezifische Leitfähigkeit höher ist als jene des Metalls (51) in Lösung mit dem Kohlenstoff.

12. Verfahren nach einem der vorhergehenden Ansprüche, wobei es in der Phase (100) der Verwirklichung eines oder mehrerer Metalldrähte einen Schritt der Verwirklichung (Mp) einer monoporigen oder multiporigen Membran (7) auf dem Substrat enthält, gefolgt von einer Elektrolyse (EL), um jeden metallischen Draht (20) in einer Pore (11) der Membran wachsen zu lassen.

13. Verfahren nach Anspruch 12, wobei der Schritt der Verwirklichung (Mp) der Membran außerdem die Verwirklichung (M) einer Maske (8, 14, 16) enthält, die eine Lokalisierung oder eine Auswahl einer oder mehrerer Poren (11) der Membran, in der oder in denen ein Metalldraht (20) durch Elektrolyse wachsen soll, ermöglicht.

14. Verfahren nach Anspruch 13, wobei die Maske aus einem elektrisch isolierenden Material unter der Membran (7) verwirklicht wird.

15. Verfahren nach einem der Ansprüche 12 bis 14, wobei die Membran (7) ein Polymer ist und die Pore(n) (11) durch Ionenbombardement (I) der Membran und durch chemische Entwicklung verwirklicht werden.

16. Verfahren nach einem der Ansprüche 12 bis 14, wobei die Membran (7) aus Aluminium ist und die Poren (11) in der Membran durch anodische Oxidation von Aluminium verwirklicht werden.
